# EUROPÄISCHE PATENTSCHRIFT

(11) **EP 2 759 422 B1**
(45) Veröffentlichungstag und Bekanntmachung des Hinweises auf die Patenterteilung: **10.10.2018**
(21) Anmeldenummer: 14152336.5
(22) Anmeldetag: 23.01.2014
(51) Int. Cl.: B60D 1/48

(54) **Anhängekupplung**
Tow bar
Attelage

(30) Priorität: 25.01.2013 DE 102013100777
(43) Veröffentlichungstag der Anmeldung: 30.07.2014
(73) Patentinhaber: Bosal ACPS Holding 2 B.V., 4131 PK Vianen (NL)
(72) Erfinder: Pietschmann, Ralf, 74369 Löchgau (DE)
(74) Vertreter: Hoeger, Stellrecht & Partner Patentanwälte mbB

(56) Entgegenhaltungen:
- EP-A1- 2 095 978
- EP-A2- 1 008 468
- CA-A1- 2 494 032
- DE-U1-202009 006 345
- FR-A1- 2 948 065
- US-A- 2 753 193
- US-A1- 2002 053 782
- US-A1- 2005 263 984

## Beschreibung

Die Erfindung betrifft eine Anhängekupplung insbesondere für Personenkraftfahrzeuge, umfassend einen Kugelhals, einen Querträger, der mit einer Halteeinheit für den Kugelhals versehen ist, sowie zwei im Abstand voneinander an dem Querträger angreifende Anbindungsteile, welche den Querträger mit Montageelementen verbinden, die ihrerseits an einer Heckpartie einer Fahrzeugkarosserie montierbar sind, wobei nur über die Anbindungsteile eine Verbindung zwischen dem Querträger und den Montageelementen erfolgt.

Derartige Anhängekupplungen sind aus der DE 20 2009 006 345 U1 bekannt. Bei diesen Anhängekupplungen wirken auf den Kugelhals sowohl Zug/Schubkräfte, die zu einer elastischen Durchbiegung des Querträgers führen, als auch in Längsrichtung des Querträgers wirkende Querkräfte, die von dem Querträger auf die Anbindungsteile und von den Anbindungsteilen auf die Montageelemente übertragen werden.

Die Kraftfahrzeugkarosserie sollte jedoch in möglichst geringem Maße mit beispielsweise durch die Durchbiegung des Querträgers erzeugten Knickmomenten und/oder mit parallel zu der Längsrichtung des Querträgers wirkenden Querkräften belastet werden, da sich ansonsten Schäden an der Heckpartie der Fahrzeugkarosserie einstellen.

Der Erfindung liegt daher die Aufgabe zugrunde, den Querträger derart mit der Fahrzeugkarosserie zu verbinden, dass unerwünschte Momente und/oder Kräfte in möglichst geringem Maße auf die Fahrzeugkarosserie übertragen werden.

Diese Aufgabe wird bei einer Anhängekupplung der eingangs beschriebenen Art erfindungsgemäß dadurch gelöst, dass die Anbindungsteile einen mit dem Querträger verbundenen Querträgerhaltesteg und zwei Bogenstege aufweisen, wobei ein erster Bogensteg den Querträger auf seiner fahrbahnabgewandten Seite und ein zweiter Bogensteg den Querträger auf seiner fahrbahnzugewandten Seite übergreift, und dass der Querträgerhaltesteg mittels den verbindungslos zum Querträger verlaufenden Bogenstegen zu einem Montagesteg verläuft, welcher mit dem jeweiligen Montageelement verbunden ist.

Der Vorteil der erfindungsgemäßen Lösung ist darin zu sehen, dass durch eine derartige Ausbildung der Anbindungsteile die Möglichkeit geschaffen wurde, im Bereich der Anbindungsteile Momente und/oder Kräfte, insbesondere Momentenspitzen und/oder Kraftspitzen, elastisch aufzunehmen und in möglichst geringem Maße an die Montageelemente weiterzugeben, die fest mit der Fahrzeugkarosserie verbunden sind.

Um insbesondere eine Krafteinleitung von dem Querträger in die Montageelemente selbst zu verhindern, ist vorzugsweise vorgesehen, dass die Anbindungsteile den Querträger berührungslos zu den Montageelementen positioniert halten.

Ferner ist ein optimal elastisches Verhalten im Bereich der Anbindungsteile dann erreichbar, wenn der mindestens eine Bogensteg in einer sich quer zum Querträger erstreckenden Fläche verläuft.

Ferner ist es ebenfalls von Vorteil, wenn der Querträgerhaltesteg zumindest mit einem Teilbereich in einer sich quer zum Querträger erstreckenden Fläche verläuft, da in diesem Fall dann in einfacher Weise der Querträgerhaltesteg mit den Bogenstegen verbunden werden kann.

Dabei könnte der Querträgerhaltesteg Befestigungsfahnen aufweisen, die quer zu der Fläche verlaufen und mit dem Querträger verbunden sind.

Der Querträgerhaltesteg kann aber auch mit einer Schmalseite oder einem Kantenbereich mit dem Querträger verbunden sein.

Ferner ist es ebenfalls von Vorteil, wenn der Montagesteg zumindest mit einem Teilbereich in einer sich quer zum Querträger erstreckenden Fläche verläuft, so dass auch eine einfache Verbindung zwischen dem mindestens einen Bogensteg und dem Montagesteg realisierbar ist.

Der Montagesteg kann dabei mit einem quer zur der Fläche verlaufenden und mit dem Montageelement verbundenen Teilbereich versehen sein.

Eine besonders kostengünstige Realisierung der Anbindungsteile ist dann gegeben, wenn der Querträgerhaltesteg, die Bogenstege und der Montagsteg ein einstückiges Teil bilden.

Hinsichtlich der Verbindung zwischen dem Querträgerhaltesteg und dem Querträger wurden bislang keine näheren Angaben gemacht.

So wäre es beispielsweise denkbar, den Querträgerhaltesteg mit dem Querträger zu verschrauben.

Beispielsweise wäre es denkbar, den Querträgerhaltesteg mit auf dem Querträger auflegbaren und mit diesem verschraubbaren Laschen zu versehen.

Eine besonders kostengünstige und stabile Verbindung zwischen dem Querträgerhaltesteg und dem Querträger lässt sich jedoch dann realisieren, wenn der Querträgerhaltesteg mit dem Querträger verschweißt ist.

Darüber hinaus wäre es ebenfalls denkbar, auch den Montagesteg mit dem Montageelement zu verschrauben.

Auch bei diesem ist es jedoch hinsichtlich der Einfachheit und Stabilität der Herstellung von Vorteil, wenn der Montagesteg mit dem Montageelement verschweißt ist.

Um eine möglichst dauerhafte und Wechselbelastungen standhaltende Verbindung zwischen dem Querträgerhaltesteg und dem Querträger zu schaffen, ist vorzugsweise vorgesehen, dass der Querträgerhaltesteg an einer Umfangsfläche des Querträgers angreift und somit stabil und dauerhaft mit dem Querträger verbunden werden kann.

Vorzugsweise ist vorgesehen, dass der Querträger sich beiderseits des Querträgerhaltestegs erstreckt, so dass die Verbindung zwischen dem Querträgerhaltesteg und dem Querträger nicht über eine Stirnseite des Querträgers erfolgt, sondern nur über die Umfangsfläche.

Ferner ist es für die Elastizität des Verhaltens der Anbindungsteile von großem Vorteil, wenn der Querträgerhaltesteg an einem Umfangsbereich des Querträgers angreift, der außerhalb eines dem jeweiligen Montageelement zugewandten Umfangsbereichs liegt.

Damit besteht insbesondere die Möglichkeit, ohne den Bauraum für die Anbindungsteile signifikant zu vergrößern, eine für das elastische Verhalten vorteilhafte möglichst große Länge der Bogenstege zu realisieren.

Insbesondere ist vorgesehen, dass der Querträgerhaltesteg an einem dem Montageelement abgewandten Umfangsbereich des Querträgers am Querträger angreift und mit diesem Umfangsbereich des Querträgers verbunden ist.

Hinsichtlich der weiteren Ausbildung der Bogenstege wurden ebenfalls keine weiteren Angaben gemacht.

So ist vorzugsweise vorgesehen, dass die Bogenstege den Querträger berührungslos übergreifend von dem Querträgerhaltesteg zu dem Montagesteg verlaufen, so dass dadurch ebenfalls die Möglichkeit besteht, eine möglichst große Bogenlänge zu realisieren.

Ferner sieht eine zweckmäßige Lösung vor, dass die dem Montageelement oder den Montageelementen zugewandten Enden der Bogenstege miteinander durch den Montagesteg verbunden sind, so dass die beiden Bogenstege mit dem Montagesteg und dem Querträgerhaltesteg einen beidseitig um den Querträger herum von dem Querträgerhaltesteg zum Montageelement verlaufenden Kraftfluss erlauben.

Ferner ist vorzugsweise vorgesehen, dass die Bogenstege zwischen dem Querträgerhaltesteg und dem Montagesteg mindestens einen elastischen Bereich aufweisen, dessen Biegeelastizität in einer Längsrichtung des Querträgers größer ist als die Biegeelastizität im Bereich des Querträgerhaltestegs oder des Montagestegs.

Hinsichtlich der Ausführung der Bogenstege ist es günstig, wenn diese mindestens in ihren elastischen Bereichen schweißnahtfrei ausgebildet sind, um eine Schwächung des Materialgefüges im Bereich des Bogenstegs zu vermeiden.

Ferner ist es günstig, wenn der Bogensteg mindestens in seinem elastischen Bereich Begrenzungskonturen aufweist, deren Radien größer als 10mm, besser größer als 15 mm und noch besser größer als 20mm sind, um keine Materialverminderung durch Kerbwirkung zu erhalten.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer erfindungsgemäßen Anhängekupplung;
- Fig. 2: eine perspektivische Darstellung der erfindungsgemäßen Anhängekupplung montiert an einer Heckpartie einer Fahrzeugkarosserie;
- Fig. 3: eine Ansicht der erfindungsgemäßen Anhängekupplung in Richtung des Pfeils A in Fig. 1 und
- Fig. 4: eine vergrößerte Darstellung einer Seitenansicht in Richtung des Pfeils B in Fig. 2 der erfindungsgemäßen Anhängekupplung mit Draufsicht auf ein Anbindungsteil.

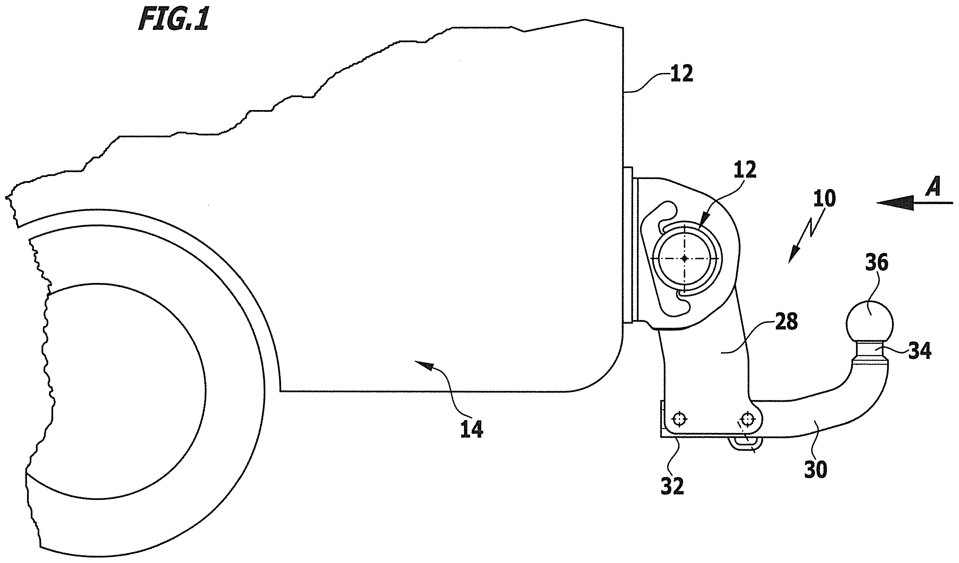

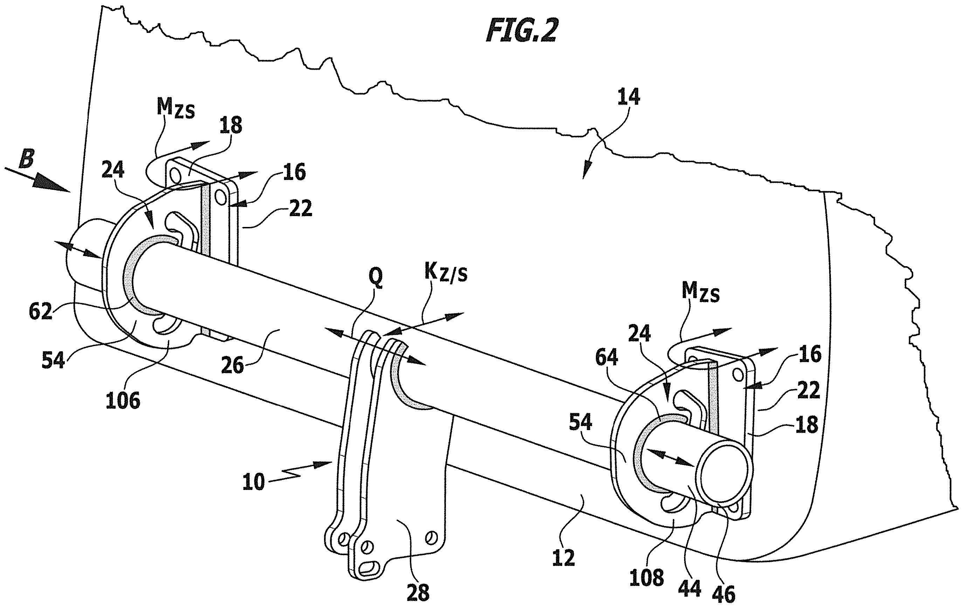

Ein in Fig. 1 und 2 dargestelltes Ausführungsbeispiel einer erfindungsgemäßen Anhängekupplung 10 ist an einer Heckpartie 12 einer als Ganzes mit 14 bezeichneten Kraftfahrzeugkarosserie, insbesondere einer Kraftfahrzeugkarosserie eines Personenkraftfahrzeugs, montierbar, wobei die Anhängekupplung 10 hierzu Montagelemente 16 aufweist, die im dargestellten Ausführungsbeispiel als Flanschplatten 18 ausgebildet sind, welche an entsprechend versteiften Montagebereichen 22 der Heckpartie 12 beispielsweise mittels Schrauben montierbar sind.

Es wäre aber auch denkbar, anstelle der Flanschplatten 18 als Längsträger ausgebildete Montageelemente 16 vorzusehen, die an in Längsrichtung verlaufenden Karosseriepartien der Kraftfahrzeugkarosserie 14 montierbar sind.

An den Montageelementen 16 greifen als Ganzes mit 24 bezeichnete Anbindungsteile an, die einen Querträger 26 mit den Montageelementen 16 verbinden.

An dem Querträger 26 ist seinerseits eine als Ganzes mit 28 bezeichnete Halteeinheit vorgesehen, welche einen als Ganzes mit 30 bezeichneten Kugelhals trägt, der mit einem ersten Ende 32 mit der Halteeinheit 28 verbunden ist und an einem zweiten Ende 34 eine als Ganzes mit 36 bezeichnete Kupplungskugel trägt.

Dabei kann die Halteeinheit 28 eine starr ausgeführte Halteeinheit für den Kugelhals 30 sein.

Es ist aber auch denkbar, die Halteeinheit 28 als Schwenkeinheit auszubilden, mit welcher der Kugelhals 30 schwenkbar an dem Querträger 26 gehalten ist.

Der in einer Arbeitsstellung stehende Kugelhals 30 erstreckt sich dabei symmetrisch zu einer Längsmittelebene 40 der Anhängekupplung 10 sowie der Kraftfahrzeugkarosserie 14, so dass auch die Kupplungskugel 36 symmetrisch zur Längsmittelebene 40 angeordnet ist, während sich der Querträger 26 mit seiner Längsachse 42 quer, vorzugsweise senkrecht, zur Längsmittelebene 40 erstreckt.

Bei dem dargestellten Ausführungsbeispiel der erfindungsgemäßen Anhängekupplung erstreckt sich der Querträger 26 ferner von der Halteeinheit 28 in Richtung der Anbindungsteile 24 sowie jeweils über die Anbindungsteile 24 hinaus, so dass äußere Enden 44 des Querträgers 26 auf einer der Halteeinheit 28 abgewandten Seite über die Anbindungsteile 24 überstehen oder zumindest die Anbindungsteile 24 soweit durchsetzen, dass die Anbindungsteile 24 nicht an Stirnseiten 46 der äußeren Enden 44 angreifen, sondern im Abstand von den jeweiligen Stirnseiten 46 des Querträgers 26 an dem Querträger 26 angreifen.

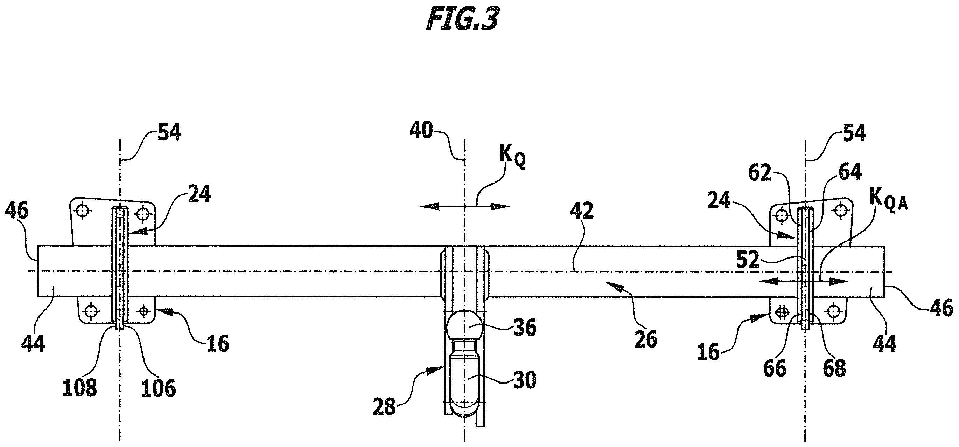

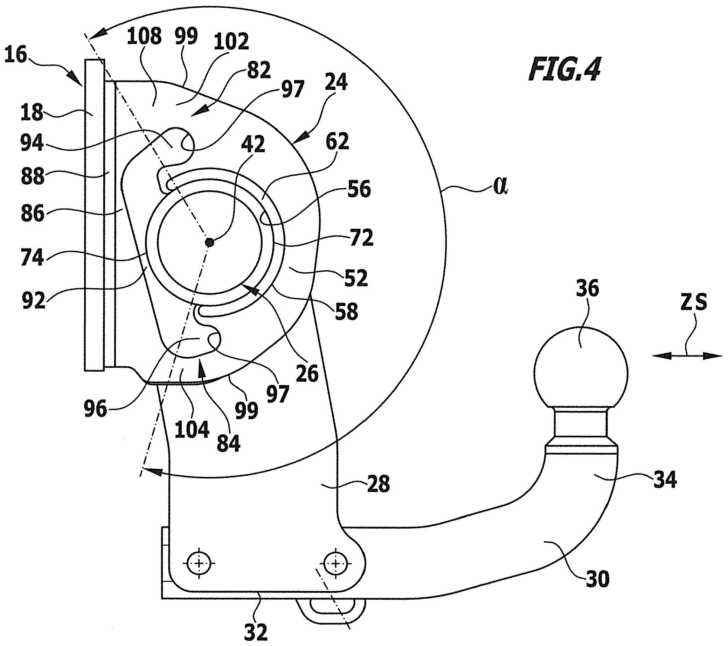

Wie in Fig. 4 vergrößert dargestellt, umfasst jedes der beiden Anbindungsteile 24 einen Querträgerhaltesteg 52, welcher sich, wie in Fig. 3 dargestellt in einer quer zur Längsachse 42 des Querträgers 26 verlaufenden Fläche 54 erstreckt, wobei die Fläche 54 im einfachsten Fall als Ebene ausgebildet ist und beispielsweise parallel oder in einem spitzen Winkel von insbesondere weniger als 45° zu der Längsmittelebene 40 verläuft.

Der Querträgerhaltesteg 52 ist dabei beispielsweise plattenförmig ausgebildet und liegt mit einer Anlagekante 56 an einer Umfangsfläche 58 des Querträgers 26 an, wobei die Anlagekante 56 sich beispielsweise über einen Umfassungswinkel α an der Umfangsfläche 58 des Querträgers 26 anliegend erstreckt, wobei der Umfassungswinkel α als ein um die Längsachse 42 umlaufender Winkel zu messen ist.

Vorzugsweise beträgt der Umfassungswinkel α mehr als 90°, noch besser mehr als 180°, vorzugsweise weniger als 270°, noch besser weniger als 230°.

Die Verbindung zwischen dem Querträgerhaltesteg 52 und dem Querträger 26 erfolgt dabei über beiderseits des Querträgerhaltestegs 52 verlaufende Schweißnähte 62, 64 (Fig. 2 und 3), die beispielsweise zusammenhängend verlaufende Schweißnähte sind, die längs einer sich zwischen der Umfangsfläche 58 und Seitenflächen 66, 68 des Querträgerhaltestegs 52 liegende Kerbe verlaufen.

Alternativ ist es aber auch denkbar, den Querträger 26 nicht durch eine durchgehend an der Umfangsfläche 58 anliegende Anlagekante 56 des Querträgerhaltestegs 52 abzustützen, sondern durch einzelne, vom Querträgerhaltesteg 52 gebildete und sich über den gewünschten Umfassungswinkel α in aufeinanderfolgenden Winkelteilsegmenten erstreckende Stützkanten abzustützen und ebenfalls noch im Bereich der Stützkanten Schweißnähte 62 und 64 vorzusehen, so dass die Verbindung zwischen dem Querträgerhaltesteg 52 und dem Querträger 26 durch nicht zusammenhängende und unterbrochene Schweißnähte 62, 64 erfolgt.

Wie insbesondere in Fig. 4 dargestellt, greift der Querträgerhaltesteg 52 nicht in einem den jeweiligen Montageelementen 16 zugewandten Bereich der Umfangsfläche 58 des Querträgers 26 an, sondern an einem Umfangsbereich 72, welcher außerhalb eines dem jeweiligen Montageelement 16 zugewandten Umfangsbereichs 74 liegt.

Bei den erfindungsgemäßen Anbindungsteilen 24 ist der Querträgerhaltesteg 52 mittels eines oberen Bogenstegs 82 und eines unteren Bogenstegs 84 mit einem Montagesteg 86 verbunden, wobei der Montagesteg 86 mit den Montageelementen 16, beispielsweise mit den Flanschplatten 18, durch eine Schweißverbindung 88 verbunden ist.

Dabei verläuft der Montagesteg 86, welcher sich zwischen dem Montagelement 16, insbesondere dessen Flanschplatte 18, und dem Querträger 26 erstreckt, berührungsfrei zum Querträger 26, so dass zwischen dem Montagesteg 86 und dem Querträger 26 ein Freiraum 92 bleibt.

Desgleichen verlaufen die Bogenstege 82 und 84 berührungsfrei zu dem Querträger 26 und umgreifen sich beiderseits an den Freiraum 92 anschließende von den Bogenstegen 82 und 84 begrenzte Bogenfreiräume 94 und 96, welche sich bis zum dem Querträgerhaltesteg 52 erstrecken.

Die Bogenstege 82, 84 sind vorzugsweise so ausgebildet, dass deren den Bogenfreiräume 94, 96 zugewandte oder abgewandte Begrenzungskanten 97, 99 Konturen aufweisen, deren Radien nicht größer als 10mm, besser größer als 15mm und noch besser größer als 20mm sind, um Bereiche durch Kerbwirkung bei zu kleinen Radien oder gar Ecken zu vermeiden.

Vorzugsweise erstrecken sich bei den erfindungsgemäßen Anbindungsteilen 24 sowohl der Montagsteg 86 als auch die beiden Bogenstege 82 und 84 in der Fläche 54, in der sich auch der Querträgerhaltesteg 52 erstreckt, und welche quer zu der Längsachse 42 des Querträgers 26, vorzugsweise senkrecht zur Längsachse 42 des Querträgers 26, verläuft.

Um Materialbrüche zu vermeiden ist vorzugsweise im Bereich der Bogenstege keine Schweißnaht vorgesehen, um eine Schwächung des Materialgefüges zu vermeiden.

Vorzugsweise sind der Montagesteg 86 und die Bogenstege 82 und 84 sowie der Querträgerhaltesteg 52 als einstückiges Teil hergestellt, vorzugsweise aus einem plattenförmigen Teil ausgeschnitten.

Bei den erfindungsgemäßen Anbindungsteilen 24 werden die auf die Kupplungskugel 36 beim Anhängebetrieb oder Lastträgerbetrieb einwirkenden Kräfte, beispielsweise Zug/Schubkräfte K_{ZS} oder Querkräfte K_{Q}, über den Kugelhals 30 und die Halteeinheit 28 in den Querträger 26 eingeleitet und von dem Querträger 26 über die Anbindungsteile 24 auf die Montageelemente 16 übergeleitet, die diese Kräfte dann in die Heckpartie 12 der Kraftfahrzeugkarosserie 14 einleiten.

Dabei führen in Richtung der Längsmittelebene 40 wirkende Zug/Schubkräfte K_{ZS} zu einer Durchbiegebewegung des Querträgers 26, die in einer durch die Kräfte K_{ZS} und die Längsrichtung aufgespannten Ebene liegt und somit die Knickmomente M_{ZS} im Bereich der Anbindungsteile 24 erzeugt, und die quer zur Längsmittelebene 40 wirkende Querkräfte K_{Q} führen jeweils zu auf die Anbindungsteile 24 wirkenden Querkräften K_{QA}. Diese Knickmomente M_{ZS} und Querkräfte K_{QA} werden durch die Anbindungsteile 24in möglichst geringen und/oder elastisch gedämpftem Maße auf die Montageelemente 16 übertragen, um die Heckpartie 12 der Kraftfahrzeugkarosserie 14 nicht mit Momentenspitzen und Kraftspitzen zu belasten.

Aus diesem Grund nehmen die Anbindungsteile 24 die Knickmomente M_{ZS} und/oder die Querkräfte K_{QA} möglichst elastisch auf und übertragen diese in möglichst gedämpften Maße auf die Montageelemente 16.

Es erfolgt eine Übertragung der Knickmomente M_{ZS} und der Querkräfte K_{QA} auf die jeweiligen Querträgerhaltestege 52, die aufgrund der Schweißverbindung mit dem Querträger 26 die Querkräfte K_{QA} unverändert aufnehmen und weiterleiten.

Die Knickmomente M_{ZS} und /oder die Querkräfte K_{QA} werden jedoch von den Bogenstegen 82 und 84, die sich ebenfalls in den Flächen 54 erstrecken, elastisch federnd aufgenommen, so dass insbesondere eine nur teilweise und/oder gedämpfte Übertragung dieser Knickmomente M_{ZS} und/oder Querkräfte K_{QA} auf den Montagesteg 86 erfolgt.

Hierzu ist es erforderlich einerseits die Länge der Bogenstege 82 und 84 möglichst groß zu wählen und andererseits die Bogenstege 82 und 84 mit elastischen Bereichen 102 und 104 zu versehen, welche durch eine Reduzierung eines Bauteilquerschnitts der Bogenstege 82 und 84 in den elastischen Bereichen 102 und 104 entsteht, wobei die elastischen Bereiche 102 und 104 noch eine ausreichende Stabilität aufweisen, um parallel zu den Flächen 54 wirkende Kräfte mit ausreichend großer Steifigkeit aufzunehmen, was dadurch erleichtert wird, dass sich die Bogenstege 82 und 84 plattenförmig in den Flächen 54 erstrecken und somit bereits aufgrund ihrer Form bei parallel zu diesen Flächen wirkende Kräfte eine hohe Steifigkeit aufweisen, während die Steifigkeit der plattenförmig ausgebildeten Bogenstege 81 und 84 bei den Knickmomenten M_{ZS} und/oder den Querkräften K_{QA}, die quer, vorzugsweise senkrecht zu den Flächen 54 wirken, insbesondere in den elastischen Bereichen 102 und 104 aufgrund des reduzierten Bauteilquerschnitts und der lediglich geringen zur Aufnahme dieser Querkräfte QA zur Verfügung stehenden Materialdicke der plattenförmigen Teile, geringer und die Elastizität größer ist.

Insbesondere sind die elastischen Bereiche 102 und 104 schweißnahtfrei ausgeführt und weisen Begrenzungskonturen 97, 99 auf, deren Radien größer als 10mm, besser größer als 15mm und noch besser größer als 20mm sind.

Somit wirkt eine Bogenlänge der Bogenstege 82 und 84 in Verbindung mit den elastischen Bereichen 102 und 104 und der Tatsache, dass die Bogenstege 82 und 84 sich plattenförmig mit parallel zu der Fläche 54 verlaufenden Flachseiten 106 und 108 erstrecken, zur Aufnahme der Knickmomente M_{ZS} und/ oder der Querkräfte K_{QA} elastizitätsfördernd.

## Patentansprüche

1. Anhängekupplung, insbesondere für Kraftfahrzeuge, umfassend einen Kugelhals (30), einen Querträger (36), der mit einer Halteeinheit (28) für den Kugelhals (30) versehen ist, sowie zwei im Abstand voneinander an dem Querträger (36) angreifende Anbindungsteile (24), welche den Querträger (36) mit Montageelementen (16) verbinden, die ihrerseits an einer Heckpartie (12) einer Fahrzeugkarosserie montierbar sind, wobei nur über die Anbindungsteile (24) eine Verbindung zwischen dem Querträger (26) und den Montageelementen (16) erfolgt, wobei die Anbindungsteile (24) einen mit dem Querträger (26) verbundenen Querträgerhaltesteg (52) und zwei Bogenstege (82, 84) aufweisen, **dadurch gekennzeichnet, dass** ein erster Bogensteg (82) den Querträger (26) auf seiner fahrbahnabgewandten Seite und ein zweiter Bogensteg (84) den Querträger (26) auf seiner fahrbahnzugewandten Seite übergreift, und dass der Querträgerhaltesteg (52) mittels den verbindungslos zum Querträger (26) verlaufenden Bogenstegen (82, 84) zu einem Montagesteg (86) verläuft, welcher mit dem jeweiligen Montageelement (16) verbunden ist.

2. Anhängekupplung nach Anspruch 1, **dadurch gekennzeichnet, dass** die Anbindungsteile (24) den Querträger (26) berührungslos zu den Montageelementen (16) positioniert halten.

3. Anhängekupplung nach Anspruch 1 oder 2, **dadurch gekennzeichnet, dass** die zwei Bogenstege (82, 84) in einer sich quer zum Querträger (26) erstreckenden Fläche (54) verlaufen.

4. Anhängekupplung nach einem der voranstehenden Ansprüche, **dadurch gekennzeichnet, dass** der Querträgerhaltesteg (52) zumindest mit einem Teilbereich in einer sich quer zum Querträger (26) erstreckenden Fläche (54) verläuft.

5. Anhängekupplung nach einem der voranstehenden Ansprüche, **dadurch gekennzeichnet, dass** der Montagesteg (86) zumindest mit einem Teilbereich in einer sich quer zum Querträger (26) erstreckenden Fläche (54) verläuft.

6. Anhängekupplung nach einem der voranstehenden Ansprüche, **dadurch gekennzeichnet, dass** der Querträgerhaltesteg (52), der mindestens eine Bogensteg (82, 84) und der Montagesteg (86) ein einstückiges Teil bilden.

7. Anhängekupplung nach einem der voranstehenden Ansprüche, **dadurch gekennzeichnet, dass** der Querträgerhaltesteg (52) mit dem Querträger (26) verschweißt ist.

8. Anhängekupplung nach einem der voranstehenden Ansprüche, **dadurch gekennzeichnet, dass** der Montagesteg (86) mit dem Montageelement (16) verschweißt ist.

9. Anhängekupplung nach einem der voranstehenden Ansprüche, **dadurch gekennzeichnet, dass** der Querträgerhaltesteg (52) an einer Umfangsfläche (58) des Querträgers (26) angreift.

10. Anhängekupplung nach einem der voranstehenden Ansprüche, **dadurch gekennzeichnet, dass** der Querträger (26) sich beiderseits des Querträgerhaltestegs (52) erstreckt.

11. Anhängekupplung nach einem der voranstehenden Ansprüche, **dadurch gekennzeichnet, dass** der Querträgerhaltesteg (52) an einem Umfangsbereich (72) des Querträgers (26) angreift, der außerhalb eines dem jeweiligen Montageelement (16) zugewandten Umfangsbereichs (74) des Querträgers (26) liegt und dass insbesondere der Querträgerhaltesteg an einem den Montageelementen (16) abgewandten Umfangsbereichen (72) des Querträgers (26) am Querträger (36) angreift und mit diesen Umfangsbereichen (72) des Querträgers (26) verbunden ist.

12. Anhängekupplung nach einem der voranstehenden Ansprüche, **dadurch gekennzeichnet, dass** die Bogenstege (82, 84) den Querträger (26) berührungslos übergreifend von dem Querträgerhaltesteg (52) zum Montagesteg (86) verlaufen.

13. Anhängekupplung nach einem der voranstehenden Ansprüche, **dadurch gekennzeichnet, dass** einer der Bogenstege (82, 84) den Querträger (26) auf einer Fahrbahn abgewandten Seite übergreift.

14. Anhängekupplung nach einem der voranstehenden Ansprüche, **dadurch gekennzeichnet, dass** einer der Bogenstege (82, 84) den Querträger (26) auf einer Fahrbahn zugewandten Seite übergreift.

15. Anhängekupplung nach einem der voranstehenden Ansprüche, **dadurch gekennzeichnet, dass** die zwei Bogenstege (82, 84) zwischen dem Querträgerhaltesteg (52) und dem Montagesteg (86) mindestens einen elastischen Bereich (102, 104) aufweisen, dessen Biegeelastizität in einer Längsrichtung (42) des Querträgers (26) größer ist als die Biegeelastizität im Bereich des Querträgerhaltestegs (52) oder des Montagestegs (86).

## Claims

1. Trailer coupling, in particular for motor vehicles, comprising a ball neck (30), a cross member (36), which is provided with a holding unit (28) for the ball neck (30), and also two spaced attachment parts (24), which engage on the cross member (36) and connect the cross member (36) to mounting elements (16), which are themselves mountable on a rear part (12) of a motor vehicle body, wherein a connection between the cross member (26) and the mounting elements (16) is achieved only by means of the attachment parts (24), wherein the attachment parts (24) have a cross member holding strip element (52) connected to the cross member (26) and two curved strip elements (82, 84), **characterised in that** a first curved strip element (82) engages over the cross member (26) on its side facing away from a road surface and a second curved strip element (84) engages over the cross member (26) on its side facing towards a road surface, and **in that** through the curved strip elements (82, 84) running to the cross member (26) without connection, the cross member holding strip element (52) runs to a mounting strip element (86), which is connected to the respective mounting element (16).

2. Trailer coupling according to claim 1, **characterised in that** the attachment parts (24) hold the cross member (26) in position in a non-contact manner relative to the mounting elements (16).

3. Trailer coupling according to claim 1 or 2, **characterised in that** the two curved strip elements (82, 84) run in a plane (54) extending transversely to the cross member (26).

4. Trailer coupling according to one of the preceding claims, **characterised in that** the cross member holding strip element (52) runs at least with a part-region in a plane (54) extending transversely to the cross member (26).

5. Trailer coupling according to one of the preceding claims, **characterised in that** the mounting strip element (86) runs at least with a part-region in a plane (54) extending transversely to the cross member (26).

6. Trailer coupling according to one of the preceding claims, **characterised in that** the cross member holding strip element (52), the at least one curved strip element (82, 84) and the mounting strip element (86) form a part in one piece.

7. Trailer coupling according to one of the preceding claims, **characterised in that** the cross member holding strip element (52) is welded to the cross member (26).

8. Trailer coupling according to one of the preceding claims, **characterised in that** the mounting strip element (86) is welded to the mounting element (16).

9. Trailer coupling according to one of the preceding claims, **characterised in that** the cross member holding strip element (52) engages on a peripheral face (58) of the cross member (26).

10. Trailer coupling according to one of the preceding claims, **characterised in that** the cross member (26) extends on both sides of the cross member holding strip element (52).

11. Trailer coupling according to one of the preceding claims, **characterised in that** the cross member holding strip element (52) engages on a peripheral region (72) of the cross member (26), which lies outside a peripheral region (74) of the cross member (26) directed towards the respective mounting element (16) and **in that** in particular the cross member holding strip element engages on the cross member (36) on a peripheral region (72) of the cross member (26) facing away from the mounting elements (16) and is connected to these peripheral regions (72) of the cross member (26).

12. Trailer coupling according to one of the preceding claims, **characterised in that** engaging over the cross member (26) in a non-contact manner the curved strip elements (82, 84) run from the cross member holding strip element (52) to the mounting strip element (86).

13. Trailer coupling according to one of the preceding claims, **characterised in that** one of the curved strip elements (82, 84) engages over the cross member (26) on a side facing away from a road surface.

14. Trailer coupling according to one of the preceding claims, **characterised in that** one of the curved strip elements (82, 84) engages over the cross member (26) on a side facing towards a road surface.

15. Trailer coupling according to one of the preceding claims, **characterised in that** between the cross member holding strip element (52) and the mounting strip element (86) the two curved strip elements (82, 84) have at least one elastic region (102, 104), the bending elasticity of which is greater in a longitudinal direction (42) of the cross member (26) than the bending elasticity in the region of the cross member holding strip element (52) or the mounting strip element (86).

## Revendications

1. Attelage de remorque, en particulier pour des véhicules automobiles, comprenant un col de boule (30), une traverse (36), qui est pourvue d'une unité de maintien (28) pour le col de boule (30), ainsi que deux pièces de raccordement (24) s'engageant au niveau de la traverse (36) à distance l'une de l'autre, lesquelles raccordent la traverse (36) à des éléments de montage (16), qui quant à eux peuvent être montés au niveau d'une partie arrière (12) d'une carrosserie de véhicule, dans lequel une liaison entre la traverse (26) et les éléments de montage (16) est effectuée seulement par l'intermédiaire des pièces de raccordement (24),
dans lequel les pièces de raccordement (24) présentent une entretoise de maintien de traverse (52) reliée à la traverse (26) et deux entretoises arquées (82, 84), **caractérisé en ce qu'**une première entretoise arquée (82) chevauche la traverse (26) sur son côté éloigné de la chaussée et une deuxième entretoise arquée (84) chevauche la traverse (26) sur son côté tourné vers la chaussée, et que l'entretoise de maintien de traverse (52) s'étend, au moyen des entretoises arquées (82, 84) qui s'étendent sans liaison en direction de la traverse (26), en direction d'une entretoise de montage (86), laquelle est reliée à l'élément de montage (16) respectif.

2. Attelage de remorque selon la revendication 1, **caractérisé en ce que** les pièces de raccordement (24) maintiennent la traverse (26) de manière positionnée sans contact par rapport aux éléments de montage (16).

3. Attelage de remorque selon la revendication 1 ou 2, **caractérisé en ce que** les deux entretoises arquées (82, 84) s'étendent dans une surface (54) s'étendant de manière transversale par rapport à la traverse (26).

4. Attelage de remorque selon l'une quelconque des revendications précédentes, **caractérisé en ce que** l'entretoise de maintien de traverse (52) s'étend au moins par une zone partielle dans une surface (54) s'étendant de manière transversale par rapport à la traverse (26).

5. Attelage de remorque selon l'une quelconque des revendications précédentes, **caractérisé en ce que** l'entretoise de montage (86) s'étend au moins par une zone partielle dans une surface (54) s'étendant de manière transversale par rapport à la traverse (26).

6. Attelage de remorque selon l'une quelconque des revendications précédentes, **caractérisé en ce que** l'entretoise de maintien de traverse (52), l'au moins une entretoise arquée (82, 84) et l'entretoise de montage (86) forment une pièce d'un seul tenant.

7. Attelage de remorque selon l'une quelconque des revendications précédentes, **caractérisé en ce que** l'entretoise de maintien de traverse (52) est soudée à la traverse (26).

8. Attelage de remorque selon l'une quelconque des revendications précédentes, **caractérisé en ce que** l'entretoise de montage (86) est soudée à l'élément de montage (16).

9. Attelage de remorque selon l'une quelconque des revendications précédentes, **caractérisé en ce que** l'entretoise de maintien de traverse (52) s'engage au niveau d'une surface périphérique (58) de la traverse (26).

10. Attelage de remorque selon l'une quelconque des revendications précédentes, **caractérisé en ce que** la traverse (26) s'étend de part et d'autre de l'entretoise de maintien de traverse (52).

11. Attelage de remorque selon l'une quelconque des revendications précédentes, **caractérisé en ce que** l'entretoise de maintien de traverse (52) s'engage au niveau d'une zone périphérique (72) de la traverse (26), qui se situe à l'extérieur d'une zone périphérique (74), tournée vers l'élément de montage (16) respectif, de la traverse (26), et que notamment l'entretoise de maintien de traverse s'engage sur la traverse (26) au niveau d'une zone périphérique (72), éloignée des éléments de montage (16), de la traverse (26) et est reliée auxdites zones périphériques (72) de la traverse (26).

12. Attelage de remorque selon l'une quelconque des revendications précédentes, **caractérisé en ce que** les entretoises arquées (82, 84) s'étendent de l'entretoise de maintien de traverse (52) vers l'entretoise de montage (86) tout en chevauchant sans contact la traverse (26).

13. Attelage de remorque selon l'une quelconque des revendications précédentes, **caractérisé en ce qu'**une des entretoises arquées (82, 84) chevauche la traverse (26) sur un côté éloigné de la chaussée.

14. Attelage de remorque selon l'une quelconque des revendications précédentes, **caractérisé en ce qu'**une des entretoises arquées (82, 84) chevauche la traverse (26) sur un côté tourné vers la chaussée.

15. Attelage de remorque selon l'une quelconque des revendications précédentes, **caractérisé en ce que** les deux entretoises arquées (82, 84) présentent entre l'entretoise de maintien de traverse (52) et l'entretoise de montage (86) au moins une zone (102, 104) élastique, dont l'élasticité en flexion est plus grande dans une direction longitudinale (42) de la traverse (26) que l'élasticité en flexion dans la zone de l'entretoise de maintien de traverse (52) ou de l'entretoise de montage (86).
